(19) Europäisches Patentamt / European Patent Office / Office européen des brevets

(11) **EP 2 478 301 B1**

(12) **EUROPEAN PATENT SPECIFICATION**

(45) Date of publication and mention of the grant of the patent:
**10.05.2017  Bulletin 2017/19**

(21) Application number: **10755238.2**

(22) Date of filing: **06.08.2010**

(51) Int Cl.:
***F24D 3/14*** *(2006.01)*

(86) International application number:
**PCT/IB2010/053568**

(87) International publication number:
**WO 2011/030241 (17.03.2011 Gazette 2011/11)**

(54) **COVERING SYSTEM FOR HEATING/COOLING ROOMS AND THERMO- ACOUSTICALLY INSULATING VERTICALLY ENCLOSED IMMOVABLE SPACES**

ABDECKUNGSSYSTEM FÜR HEIZ-/KÜHLRÄUME UND THERMOAKUSTISCHE ISOLIERUNG VERTIKAL EINGESCHLOSSENER UNBEWEGLICHER RÄUME

SYSTÈME DE RECOUVREMENT POUR CHAUFFER/REFROIDIR DES PIÈCES ET ISOLER THERMIQUEMENT ET ACOUSTIQUEMENT DES ESPACES FIXES ENTOURÉS VERTICALEMENT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.09.2009  IT PD20090263**

(43) Date of publication of application:
**25.07.2012  Bulletin 2012/30**

(73) Proprietor: **STP S.r.L.**
**10121 Torino (IT)**

(72) Inventor: **PELLEGRINI, Gianfranco**
**I-10137 Torino (IT)**

(74) Representative: **Cinquantini, Bruno et al**
**Notarbartolo & Gervasi S.p.A.**
**Corso di Porta Vittoria, 9**
**20122 Milano (IT)**

(56) References cited:
| | |
|---|---|
| **EP-A1- 0 002 839** | **EP-A1- 1 382 915** |
| **EP-A2- 1 630 479** | **EP-A2- 1 835 234** |
| **FR-A1- 2 802 621** | **US-A1- 2005 252 226** |
| **US-B1- 6 347 748** | |

## Description

### FIELD OF THE INVENTION

The present invention falls within the field of climate control and thermal insulation of rooms. In particular, the present invention relates to a system for heating/cooling rooms and termo-acoustically insulating one or more immovable spaces such as, for example, buildings for residential, commercial or even industrial use. The covering system according to the invention may be installed in existing rooms or rooms being built. The system actively acts on climate control, while ensuring the necessary thermal insulation and a high energy saving. The present invention further relates to a method for climate controlling and thermally insulating a room, which is based on the use of a covering system according to the present invention.

### STATE OF THE ART

A room and a method for heating/cooling and thermally insulating a room according to the preamble of claim 1 and 8, respectively, are known from document EP 0002839.

As known, in recent years, building climate control has gained considerable importance given the environmental and energy implications related thereto. The term "climate control" means both the heating inside the building, during the winter season, and the cooling thereof, during the summer season. It is equally known that climate control systems serve the function of maintaining the temperature inside the building at a value set by the user. The most traditional heating systems consist of a boiler, which heats the water directed to radiating means (radiators, tubes installed in the floor, etc.) arranged inside the room to be heated. In most cases, the cooling of the building is carried out by means of terminals arranged inside the rooms to be cooled. In recent years the use of heat pumps, i.e. thermal machines capable of heating and/or cooling a fluid according to the operative cycle set, has become widely common. A system of the above type is shown, for example, in US 6347748. In order to contain the use of these climate control machines, i.e. to contain the corresponding energy cost and/or the corresponding emissions into the atmosphere, research has addressed the development of covering systems for improving the thermal insulation of peripheral walls. In particular, wall covering systems have been developed to limit outward thermal dispersions during the winter season and to limit the internal heating during the summer season. These covering systems, commonly also referred to as "cladding", are traditionally formed by one or more layers of thermally insulating material applied to the outer wall surface. These insulating layers decrease transmittance (i.e. the heat transmission coefficient) of the walls, i.e. intervene on that physical property on which thermal dispersions directly depend. In addition to transmittance, thermal dispersions also directly depend on the extension of the walls and on the difference between inside temperature and outside temperature, hereinafter also indicated by the term "thermal gradient". It is therefore evident that the thickness of the covering should increase as the thermal gradient increases, the considered material being equal. This is obviously inconvenient from the point of view of material and installation costs.

In order to overcome this limit, coverings have been developed which integrate tubes therein, in which temperature-controlled water is circulated in order to reduce the thermal gradient difference between the internal side and the external side of the wall. In other words, these systems mainly work to reduce the thermal gradient which influences thermal dispersions.

A first example of these covering systems is described in patent application DE 197 400 74. In particular, this system is formed by an innermost layer of insulating material, directly applied onto the walls of the building, and an outermost layer of polystyrene applied to the inner layer. The outermost layer is further covered with covering elements. Tubes are arranged within the polystyrene layer, through which water at constant temperature deriving from a constant temperature source is circulated. The water passing within the tubes maintains the temperature of the insulating layer, and precisely reduces the thermal gradient existing between the same insulating layer and the room inside the building.

Patent EP0049790 describes a covering system conceptually similar to that described above. More precisely, in the second case, the system includes a layer of insulating material in contact with the outer wall of the building and separated by an outermost layer through a ventilation chamber. The insulating layer or the ventilation chamber are crossed by tubes in which temperature-controlled water circulates. The latter is circulated at a temperature between the temperature inside and outside the building. The water temperature is maintained by using low-consumption energy sources (e.g. bed water, discharge water, cooling water, etc.) or alternatively by using an accumulator which works as a "thermal plenum". Also in this case, the circulation of temperature-controlled water has the purpose of containing the thermal gradient between the room inside the building and the insulating layer near which the tubes are placed.

Further types of covering systems integrate solar collectors therein, i.e. means for recovering the thermal energy which is accumulated in the outermost layers of the covering as a result of solar radiation. Patent application DE3435613, for example, describes one of these coverings. More precisely, according to this solution, the covering comprises insulating plates connected by an adhesive material layer to the outer surface of the building wall, and plaster layers applied outside the insulating plates. Tubular elements are arranged on the external side of the plates, in which water is circulated. This is heated by the heat accumulated in the plaster layers to be then taken into accumulators or feed heating systems for domestic and sanitary use. The above-described types of building covering, as others which are conceptually similar, may be however considered as "passive" from the point of view of climate control. In other words, these coverings do not actively intervene in climate control, but are simply structured so as to limit thermal dispersions. This means that during the winter season, for example, the described coverings serve the function of limiting the thermal flow through the walls from the inside room, at a higher temperature, to the outside environment, at a lower temperature. However, these coverings do not directly contribute to heating, i.e. to regulating the inside temperature. Indeed, in traditional solutions, this task is exclusively left to the terminals in the room (radiators, radiating panels, etc.), which regulate the temperature from the inside. Similarly, during the summer season, the traditional coverings limit the inward flow from the outside, but are passive with regards to regulating the inside temperature, which continues to be carried out by using terminals in the room (fan coil units, diffusers, etc).

From the energy point of view, the traditional coverings may actually limit the use of thermal machines (heating and cooling), and thus energy consumption, providing that the insulation is particularly effective. In order to obtain this condition, however, a major economic investment is required both in terms of materials and structures employed and in terms of manpower. Importantly, such an investment is considerable in the case of old buildings characterized by walls with a very bad insulation degree and provided with systems of old design.

On the basis of these considerations, the need to avail of alternative solutions which allow to overcome the above-indicated limits arises. It is thus a main task of the present invention to provide a covering system which allows a high degree of thermal insulation, while actively contributing to climate control. In the scope of this task, it is a first object to provide a covering system which allows a high energy saving with a low initial economic investment. It is another object to provide a covering system which may be easily installed, either on existing or newly built walls. It is a not last object of the present invention to provide a covering which is reliable and easy to be made at competitive costs.

## SUMMARY

The present invention thus relates to a room and method for heating/ cooling and thermally insulating a room according to claims 1 and 8. The system according to the invention allows the temperature inside the room to be regulated by means of a heat exchange between the water circulating in the circulating elements and the inside. Such a heat exchange occurs through the same walls by virtue of the position of the circulating elements in contact with the outer surface of the walls and by virtue of the presence of covering means which insulate the inside spaces from the outside environment. The heat exchange extent is regulated by the heat pump, both during winter and summer operating modes. In practice, heating and cooling are obtained through operative means arranged outside, and not inside the walls, as traditionally occurs. Among the other advantages, this possibility allows the heating components, such as for example radiators, and the cooling elements, such as fan coil units, to be suppressed. This aspect is particularly advantageous in buildings for residential use, or more generally, in all environments in which the room availability is a critical factor.

The system according to the invention is particularly advantageous also in case of old buildings or buildings characterized by poorly insulated outer walls. Indeed, in this case, the high transmittance of the walls facilitates the thermal exchange between the water circulating elements and the rooms inside the building, i.e. facilitates the climate control of the building itself. Unlike the traditional solutions which employ climate control means inside the heated/cooled rooms, the efficiency of the system according to the invention improves as the transmittance of the outer peripheral walls increases. The delivery temperature regulation (set-point temperature of the heat pump) according to outside temperature allows the heat pump to work with very high efficiency because the delivery temperature of the water is regulated to the minimum value during winter operation and to the maximum value during summer operation, needed to maintain a predetermined temperature in the rooms to be heated/cooled. Furthermore, due to the high heat exchange surface with respect to the traditional terminals in rooms, the system allows to heat the rooms in winter with lower delivery temperatures than those of the traditional terminals in rooms, and to cool them in summer with higher delivery temperatures. This allows the heat pump to work with less waste of power both in winter and summer conditions. Furthermore, in summer operation, the high delivery temperature allows to avoid the formation of condensation on the outer surface of the tubes under all operating conditions. In other words, the system may ensure alone, i.e. without integration of other additional systems, the complete cooling in summer. This aspect is not possible with other systems, such as floor-, ceiling- or wall-mounted radiating panels.

The high operating efficiency advantageously results in low energy consumption. With this regard, it has been noted that using a heat pump of the water-water type allows higher energy saving and has better efficiency than air-water pumps. However, heat pumps of air-water type may also be used under favorable climatic conditions.

The regulation of the flow rate according to the temperature inside the room advantageously allows to optimize the water distribution in the hydraulic circuit according to outside parameters (e.g. exposure to solar radiation and/or presence of indoor heat sources) which, in all cases, influence the temperature level inside the room. In particular, the regulation and distribution of the flow rate according to the inside temperature advantageously allows to optimize the operation of the climate control means because the flow rate is distributed according to the thermal flow which actually crosses the covering means. Indeed, the latter contrast the heat flow between walls and external environment. Such a flow, for example, varies according to weather conditions and, in particular, according to the covered wall. Through the regulation and distribution by appropriate valves, the contrast effect becomes dynamic and is practically expressed as a flow rate variation in the tubes underneath the covering and exposed to the solar radiation.

LIST OF FIGURES

Further features and advantages of the present invention will be more apparent in the description of preferred, but not exclusive embodiments of the covering system and method according to the present invention, illustrated by way of non-limiting example with the aid of the accompanying drawings, in which:

- figure 1 is a schematic view of a covering system according to the present invention;
- figure 2 is a perspective view of a first embodiment of a covering system according to the present invention;
- figure 3 is a side view of the covering system in figure 2;
- figure 4 is a perspective view of a second embodiment of a covering system according to the present invention;
- figure 5 is a side view of the covering system in figure 4;
- figure 6 is a perspective view of a third embodiment of a covering system according to the present invention;
- figure 7 is a side view of the covering system in figure 6;
- figure 8 is a first schematic view of the installation of a hydraulic circuit of a covering system according to the present invention;
- figure 8A is a second schematic view of the installation of a hydraulic circuit of a covering system according to the present invention;
- figure 9 is a view of constructional components of the hydraulic circuit in figure 8;
- figure 10 is a schematic view of the installation of a hydraulic circuit insulating elements of a covering system according to the present invention;
- figure 11 is a perspective view of a first insulating element of a covering system according to the present invention;
- figures 12 and 13 are views taken along lines XII-XII and XIII-XIII in figure 11, respectively;

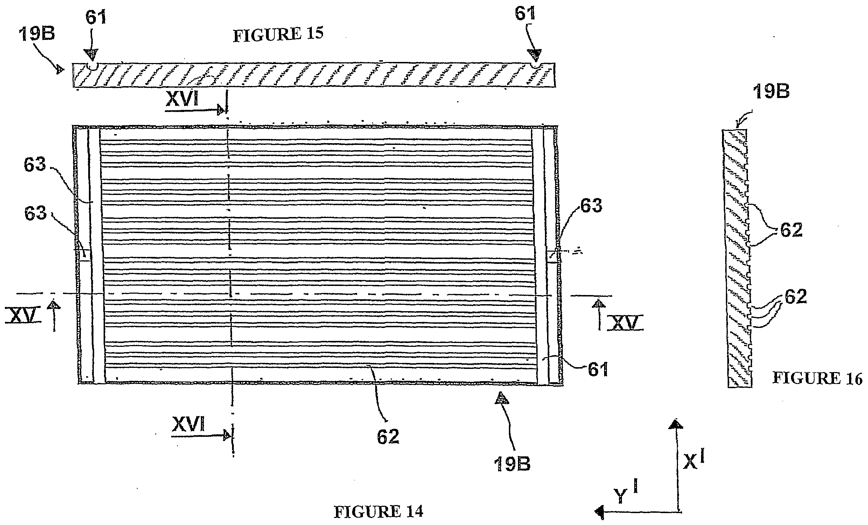

- figure 14 is a view of a second insulating element of a covering system according to the present invention;
- figures 15 and 16 are views taken along lines XV-XV and XVI-XVI in figure 14, respectively.

DETAILED DESCRIPTION OF THE INVENTION

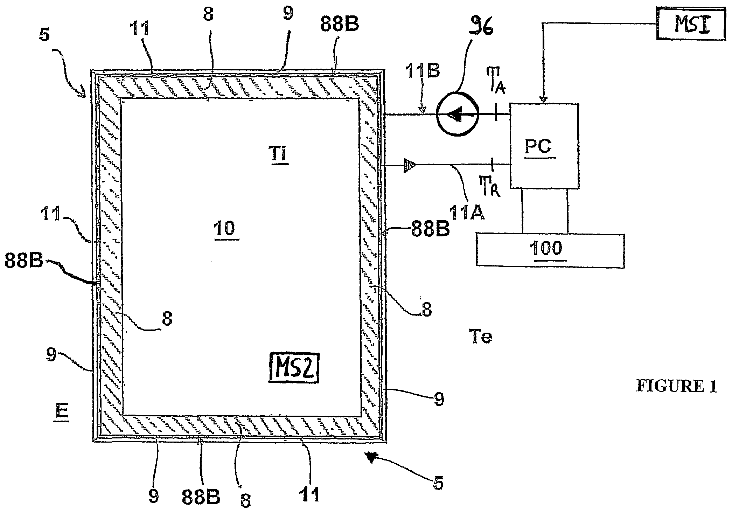

Figure 1 is a schematic view of a room 10 of a building in which a climate control and insulation system according to the invention, generally indicated by reference numeral 5, is installed. In this case shown in figure 1, the room has a substantially rectangular plan only for descriptive simplicity, but it may have a different structure. In other words, for the purposes of the present invention, the word "room" 10 indicates any heated inner volume at least partially delimited by a peripheral wall 8, 8A which separates it from the outside E.

The covering system 5 is provided with heating/cooling means, which will be indicated thereinafter by the term "climate control means". These means comprise a plurality of elements 11 for circulating water (also referred to as water circulating elements 11 below) installed in contact with the outer surface 88B of the peripheral walls 8, 8A of the building, which at least partially delimit the periphery of the room. These walls 8, 8A will be also named "opaque walls" below, thus indicating not only masonry walls but also walls made of other materials, such as wood, metal alloys, etc. The term "masonry walls" comprises any type of wall known in the construction field, such as walls made of concrete or bricks. In this case schematically shown in figure 1, the water circulating elements 11 are installed on all the peripheral walls 8 which delimit room 10. The possibility of installing the elements 11 on some walls of room 10 only and not on the whole peripheral surface obviously falls within the scope of the invention.

The climate control means of the system according to the invention further comprise a heat pump PC operatively connected to the hydraulic circuit to vary the temperature of the water circulating within the circuit itself. In other words, the function of the heat pump PC is to take and/or maintain the water in the hydraulic circuit to/at a predetermined temperature Ta. Such a temperature Ta is hereinafter indicated by the expression "set-point temperature" of the heat pump PC. According to the present invention, the set-point temperature Ta of the heat pump is established according to the temperature Te of the environment outside the building. The latter may be monitored by means of a temperature sensor or generally by means of first functionally equivalent sensor means MSI. Through this solution, the delivery temperature Ta in the hydraulic circuit is varied according to the outside climatic conditions, so that the temperature always maintains the minimum value sufficient to ensure the desired inside temperature Ti. This operating condition allows to optimize the operation of the heat pump PC, i.e. to advantageously increase energy saving.

The set-point temperature Ta may be continuously regulated by means of an electronic regulating device, i.e. according to a predetermined function, so that each outside temperature value Te corresponds to a set-point temperature value Ta. The function which governs such a variation is established according to parameters related to the building and to the covering system (e.g. the size of the hydraulic circuit, the thermal conduction capacity of the walls, etc.) and according to the performance of the heat pump PC.

The electronic regulating device may also implement an adjustment of the set-point temperature Ta which is varied only if the temperature Te increases/decreases by a predetermined range. Thereby, the operation of the heat pump PC is especially optimized in terms of electric consumptions. Indeed, the heat pump PC may remain advantageously "insensitive" to minor variations in outside temperature Te. According to the present invention, the water flow rate, i.e. its distribution in the circulating elements 11, is regulated according to the inside temperature Ti detected by second sensor means MS2 placead within room 10. In essence, in the "active" operation mode of system 5, this type of regulation allows to take some "external" factors of the system itself into account, such as for example the sun exposure of the peripheral walls and the presence of heat sources inside the room.

Again with reference to the schematic illustration in figure 1, the system according to the invention further comprises covering means 9 made of thermally insulating material which are arranged so as to externally and laterally cover the water circulating elements 11 of the climate control means. This means that the covering elements are shaped so as to surround the circulating elements 11 in all directions, thus not leaving any gap between the outer surface 88B of the peripheral wall 8, 8A and the same covering elements. In other words, the covering means 9 are such not to only externally cover the circulating elements 11, but are also such to occupy the space between two reciprocally adjacent circulating elements 11. The covering means 9 thus externally cover the portions of surface 88B of the peripheral wall 8 not occupied by the circulating elements 11. The covering means 9 are preferably chosen so as to have marked thermal-acoustic insulation and structural properties. With this regard, using sintered polystyrene foam (EPS) is particularly indicated.

By virtue of the climate control means indicated above, system 5 according to the present invention allows to control the climate of room 10, i.e. to adjust the relative inside temperature Ti. Such a regulation is based on a heat exchange between the water circulating in the hydraulic circuit and the inside room 10 through the opaque peripheral walls 8. In other words, the heating or cooling of the inside room is obtained from the outside, by exploiting the thermal transmission capacity of the opaque walls 8.

Unlike traditional solutions, the opaque walls are used as heat transmitting elements in order to maintain temperature Ti at a predetermined level. The direction of the heat flow (from the inside outwards or vice versa) will depend on the outside climate conditions and/or on the winter or summer operation of the heat pump PC. During the summer season, i.e. when the outside temperature Te is higher than the inside temperature Ti, the water circulating temperature Ta will be lower than the inside temperature Ti and the heat flow through the opaque walls 8 will be directed outwards from the inside to contrast the heat flow from the outside by means of the insulating means 9. On the other hand, during the winter season, i.e. when the outside temperature Te is lower than the inside temperature Ti, the water delivery temperature Ta will be higher than the inside temperature Ti and the heat flow through the opaque walls 8 will be directed inwards from the outside to balance the heat flow dispersed outwards by means of the insulating means 9.

System 5 according to the invention has many advantages from the practical point of view, the first of which relates to the possibility of eliminating the installation of traditional climate control means inside the heated/cooled rooms. Such an aspect is particularly advantageous in case of buildings for residential use, and more generally for all rooms in which the inside space available for users is a critical factor. At the same time, the "climate control from the outside" provided by the system does not make the transmittance of opaque walls 8 a critical factor, as in traditional solutions, but rather high transmittance values of the walls (e.g. higher than $0.8 \ W/M^{2*}K$) are a positive aspect. In practice, the system does not require all the traditional contrivances used to increase the insulation of opaque walls and substantially suppresses most of the thermal bridges which characterize the traditional solutions. The fact that, from the economic point of view, the costs of the system according to the invention are substantially equal to those of a traditional passive insulating covering with an inside climate control system, the considered structure being equal, should be further added to these advantages.

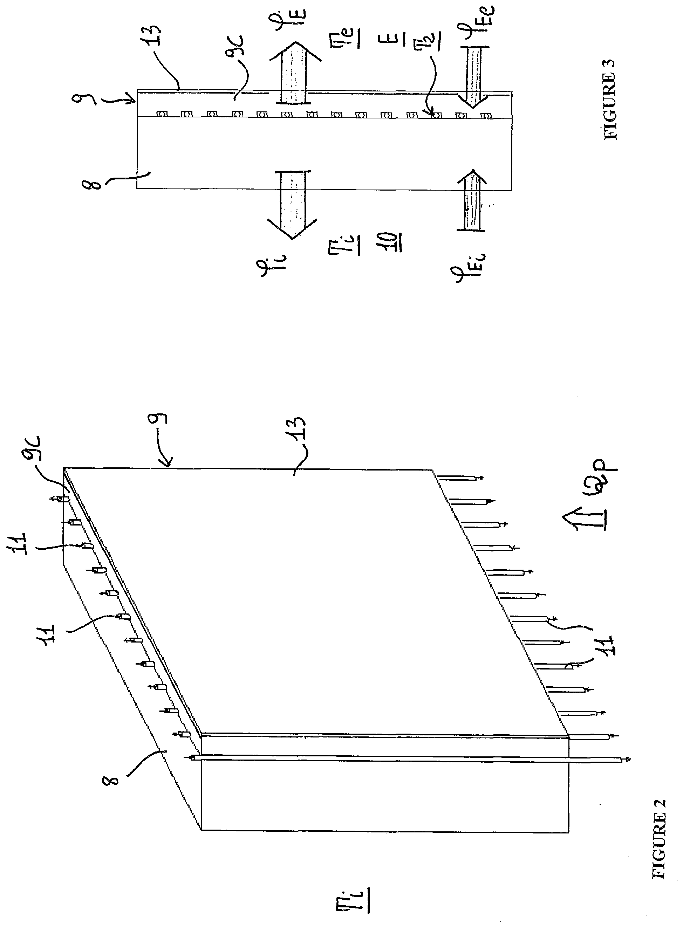

Figures 2 and 3 show in detail a portion of a wall 8 of a room 10. As shown, the covering means 9 are configured as an insulating layer 9C, the outer surface of which may be further covered with an outermost covering layer 13 serving a prevalently aesthetic, weatherproofing function. Such an outermost layer may be made of concrete, but it may also consist of a protective paint or other functionally equivalent means.

In the solution shown in figures 2 and 3, the water circulating elements 11 are in the form of tubes, the number, diameter and reciprocal distance of which will depend on the operative conditions, such as for example the extension of the building and the thermal flow, which should be ensured by the flow rate of the water circulating in the hydraulic circuit. As mentioned above, the covering means 9 are preferably made in the form of panels anchored to the building walls so as to completely cover the water circulating elements 11. With this regard, these panels are preferably configured so as to be able to cover and surround, preferably in a complete manner, the circulating elements 11, i.e. so as to directly cover the portions of the outer surface 88B which are not directly occupied by the water circulating elements. This configuration of the covering means 9 allows to optimize the thermal conduction through the opaque walls 8, i.e. the operation of the climate control means of the covering system 5.

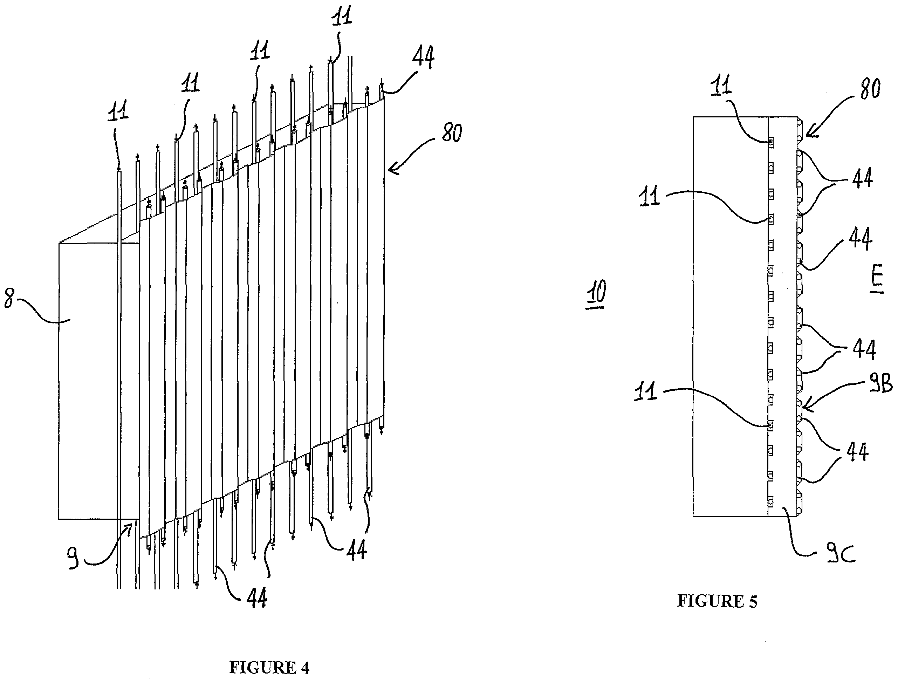

Figures 4 and 5 show a second possible embodiment of the system according to the invention according to which the covering means 9 integrate a solar collector 80 for heating water intended for domestic or sanitary use. More specifically, tubes 44 are placed inside the insulating layer 9C defined by the covering means 9, in which tubes the water or other fluid to be heated is intended to be circulated by means of an appropriate circulation pump (not shown). As apparent from the section view in figure 5, these tubes 44 are placed in a position adjacent to the outer surface 9B of the insulating layer 9C so as to absorb as much of the heat as possible, which heat is accumulated in the surface layers of the insulating layer 9C. In order to increase the heating of the vector fluid in the tubes 44 of the solar collector 80, the outer surface of the covering means 9 is shaped so as to have a substantially "fretted" shape and is preferably colored with opaque, dark pigment in order to capture more solar radiation.

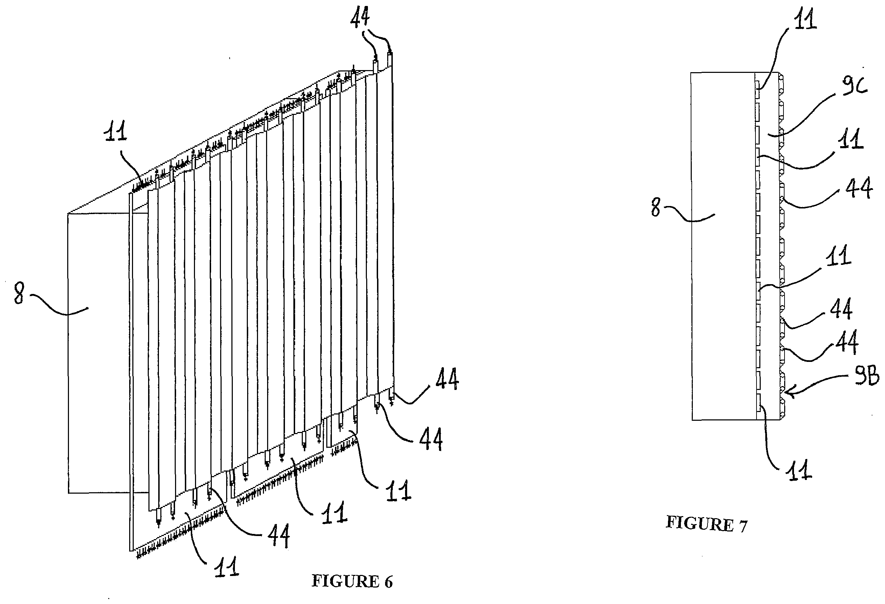

Figures 6 and 7 show a further possible configuration of the climate control. In particular, this further embodiment substantially differs from that shown in figures 4 and 5 due to a different embodiment of the water circulating elements 11 which are in the form of slotted boxes. As shown in figure 4, the arrangement of the slotted boxes allows a substantial vertical flow with respect to the outer surface of the opaque walls 8. However, these circulating elements 11 could be also arranged in different directions according to the best operative conditions.

Again with reference to figure 1, the heat pump PC is connected to the hydraulic circuit by means of a first branch 11A, through which the water at a temperature Tr reaches the inlet of a heat exchanger of the same heat pump PC in order to be heated/cooled. A second branch 11 B connects instead the oulet of the same heat exchanger to the inlet of the hydraulic circuit, thus substantially forming the delivery branch of the heat pump PC. From the operative point of view, in winter operating mode (outside temperature Te lower than the desired inside temperature Ti), the heat exchanger of the heat pump PC serves the function of heating the water provided at a temperature Ta to a delivery temperature Ta (set-point temperature) according to the outside temperature Te and to the desired temperature Ti. Under this condition, such an exchanger consists of a condenser (hot source) of the heat pump PC. On the other hand, in summer operating mode (outside temperature Te lower than inside temperature Ti), the heat exchanger consists of the evaporator of the heat pump PC in order to cool the circulating water from the temperature Tr up to the delivery temperature Ta (set-point temperature).

As shown again in figure 1, the delivery branch 11 B comprises a hydraulic pump 96 to allow the circulation of water inside the hydraulic circuit. The heated/cooled water reaches the circulating elements 11 by means of the hydraulic pump 96. The flow rate of water sent to the hydraulic circuit by pump 96 will depend on the speed of the pump itself. As mentioned above, the flow rate of water crossing the same elements 11 is instead regulated by means of a plurality of regulating valves 93 according to the desired inside temperature Ti within room 10.

The heat pump PC thus exchanges thermal energy on one side with the water circulating in the hydraulic circuit by means of a heat exchanger, which according to operation (winter or summer operation) consists either of the condenser or the evaporator of the pump itself. On the opposite side, the heat pump preferably exchanges heat with a thermal reserve 100, which acts either as hot or cold source according to the operating cycle (winter or summer) of the heat pump PC. Preferably, the heat pump PC is of the water-water type and is intended to exchange thermal energy with a water reserve (at a temperature between 10 and 20°C), which may be, for example, a geothermal source or, alternatively, a water current or basin deriving from a water bed or a waste water current or basin deriving from a hydroelectric powerplant. In other words, the water-water heat pump PC exchanges thermal energy with a low-cost source. The possibility of using a heat pump of the air-water type obviously falls within the scope of the present invention, especially in those resorts with particularly favorable climatic conditions. Furthermore, where environmental conditions so allow, the heat pump PC from the electric point of view may be actuated by a photovoltaic system. Under these conditions, the covering system 5 is particularly advantageous from the energy and environment point of view.

Without being bound to any theory, in order to further understand the advantages of the present invention, two possible operative conditions (winter, summer) of the covering system 5 shown in figures 2 and 3 are explained below.

## Winter operation

In winter operating mode, the heat flow crossing the tube (hereinafter indicated by $\varphi$) is to be either higher than or equal to the thermal power Qp of the heat generator, i.e. of the heat pump PC. A first part $\varphi_i$ is intended to flow outwards through the peripheral wall 8, while a part is intended to inevitably flow outwards through the insulating layer 9C defined by the insulating means 9. Indicating with Qc the dispersions through the insulating layer 9C, the heat flow towards the inside of the building should be at least equal to the difference between the thermal power of the generator and the dispersions through the insulating layer 9C, i.e. the following relation should exist:

$$\varphi_I = Qp - Qc$$

Moreover, the inward heat flow should be at least equal to the heat dispersions through the insulating layer 9C. Therefore, the following expression must apply:

$$Uc*S*[T2-Te]=U*S* [T2-Ti]$$

where S is the whole vertical surface covered by the insulating layer 9C, Te is the outer basic temperature, Ti is the inside winter temperature, $T_2$ is the average circulating water temperature at the opaque surface (see figure 3), Ui is the transmittance of the opaque walls, and Uc is the transmittance of the insulating layer 9C only.

The value of $T_2$ is obtained from the previous equation:

$$T_2 = (Ti*U - Te*Uc)/(U - Uc)$$

It is worth noting that the temperature $T_2$ which should be ensured to the tubes substantially depends on the transmittance of both the insulating layer 9C and the opaque walls 8. In particular, the temperature $T_2$ increases very quickly as the transmittance of the opaque walls 8 decreases.

For energy efficiency purposes, temperature $T_2$ should preferably be as low as possible. Therefore, the covering system 5 may be inferred to be all the more convenient the less insulating are the opaque walls 8 covered by the system itself. In other words, the predetermined inside temperature Ti being equal, in the case of badly insulated opaque walls 8, system 5 has a twofold advantage because it allows an energy saving due to the thermal insulation offered by the insulating means 9 and provides an additional energy saving because the system becomes energetically more efficient due to the low value of the system temperature $T_2$, i.e. because of the corresponding low value of the delivery temperature Ta of the heat pump PC.

Again with reference to the last equation shown above, it is worth noting that the temperature $T_2$ decreases as the external temperature Te increases. Therefore, an improvement of the outside climatic conditions (i.e. an increase of temperature Te) in addition to decreasing dispersions through the covering means 9 also leads to a reduction of temperature $T_2$ with obvious advantages from the energy point of view. Since the heat pump PC has a varying set-point temperature Ta according to the outside temperature Te, the power absorbed by the same heat pump PC will then decrease as the outside temperature Te increases, i.e. it will always be the minimum requested. Therefore, the heat pump PC will be able to advantageously work under maximum efficiency conditions, i.e with high Coefficients of Performance (COPs).

Summer operation

In summer operating mode, the heat flow crossing the tubes (hereinafter indicated by $\varphi_E$) should be either equal to or higher than the refrigerant power Fp provided by the heat pump PC. A first part $\varphi_{Ee}$ is intended to flow inwards from the outside environment (temperature Te) through the insulating layer 9C defined by the insulating means 9, while a second part $\varphi_{Ei}$ is intended to flow from the inside room to the tube through the opaque wall 8. Under balance conditions, the thermal load through the insulating layer 9c should be at least equal to the heat flow through the opaque walls. In practice, at least the following condition must apply:

$$Uc*S*[Te - T_2]=U*S* [Ti - T_2)$$

S is the whole vertical surface of the building covered by the insulating layer 9C, Te is the outer basic temperature, Ti is the inside winter temperature, $T_2$ is the average circulating water temperature at the outer surface of the opaque surface 8 (see figure 3), Ui is the transmittance of the opaque walls, and Uc is the transmittance of the insulating layer only.

The value of $T_2$ is obtained from the previous equation:

$$T_2 = (Te*U - Ti*Uc)/(U - Uc)$$

Also in this case, it is noted that the temperature $T_2$ at which the water is to be maintained in the tubes, substantially depends on the transmittance of the insulating layer 9C and on that of the opaque walls. In particular, the temperature $T_2$ decreases very quickly as the transmittance of the opaque walls 8 increases. In the case of summer operating mode, for the purposes of energy efficiency, temperature $T_2$ should preferably be as high as possible. Therefore, also in the case of summer operation, the chosen inside temperature Ti being equal, the application of the system may be inferred to be all the more convenient the less insulating are the covered opaque walls 8.

Also in the case of summer operation, the regulation of the delivery temperature according to the outside climatic conditions advantageously optimizes the efficiency of system 5. Indeed, the improvement of the outside climatic conditions, i.e. a decrease of the outside temperature Te, leads to an increase in the delivery temperature Ta, i.e. an increases of temperature $T_2$. The required refrigerant power correspondingly decreases and the power absorbed by the heat pump PC decreases therewith. Therefore, the heat pump PC may work under high efficiency conditions even under these conditions. Furthermore, the high delivery temperature Ta allows to avoid the formation of condensation on the outer surface of the tubes under all operating conditions. In other words, the system may ensure the complete cooling in summer alone, i.e. without integration of other additional systems. This advantageous condition is not possible with other systems, such as floor-, ceiling- or wall-mounted radiating panels.

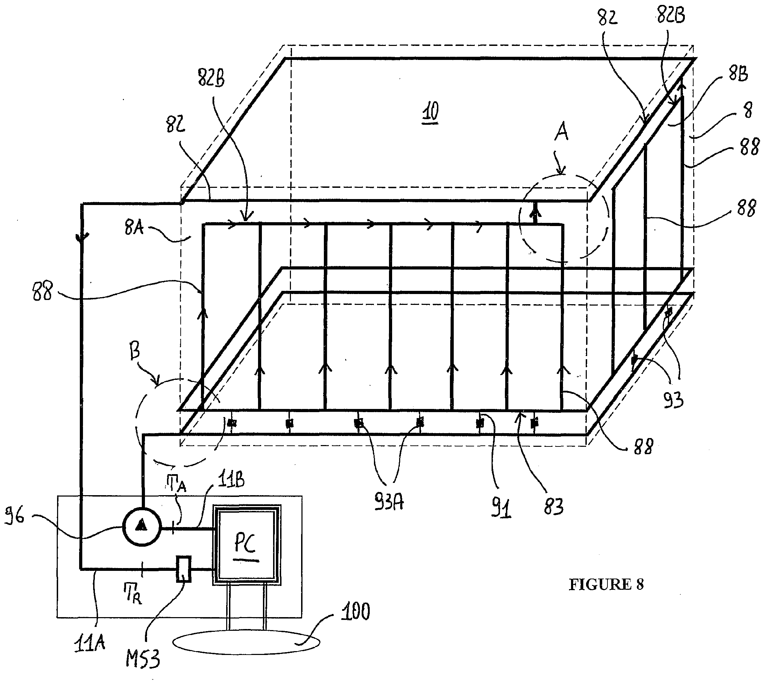

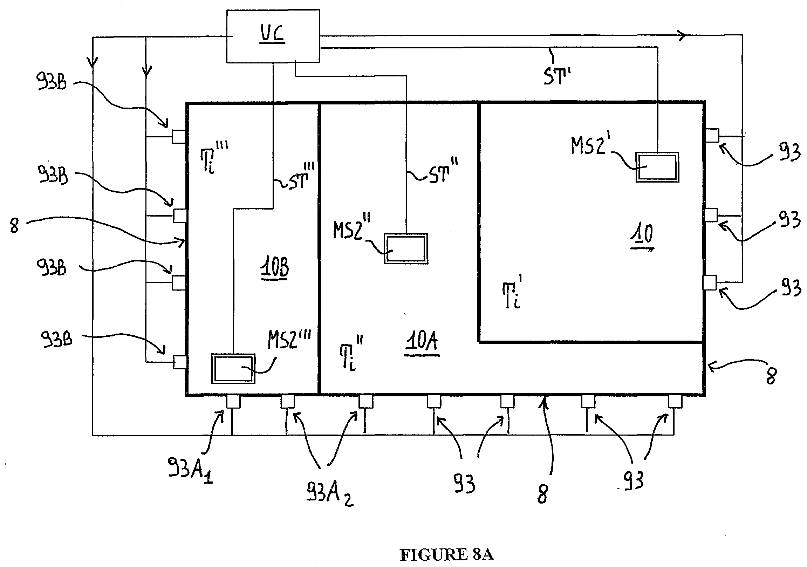

Figure 8 is a schematic view of a covering and climate control system 5 which shows a possible configuration of the hydraulic circuit consisting of the circulating elements 11. As shown, the hydraulic circuit comprises one or more flow regulating valves 93, 93A, which regulate the flow rate along a portion of the hydraulic circuit according to the temperature Ti inside the room, measured by second temperature sensor means MS2. More precisely, the flow rate is distributed within the parts of the hydraulic circuit according to the difference between the real temperature measured inside the room and the desired temperature Ti of the room itself. The flow rate of water circulating in the tubes correspondingly increases as such a difference increases. On the contrary, if the real measured temperature is either equal to or higher than the desired temperature Ti, then the flow rate distributed to the valves 93,93A correspondingly decreases. This regulation advantageously allows to optimize the operation of the covering and climate control system 5 because it takes into account the real temperature conditions inside the environment, which are also influenced by the exposure to solar radiation and/or by the presence of heat sources, e.g. operating machines, for example.

In the case of winter operation, for example, the flow rate in the circulating elements 11 on the walls 8, 8A, 8B of the building may be decreased if the walls themselves are more exposed to solar radiation and vice versa. Indeed, the temperature detected by the second sensor means MS2 will be also influenced by the thermal flow caused by the radiation which crosses the opaque walls. Similarly, in the case of summer operation, if the building is in the shade (poor exposure to solar radiation), then the flow rate of water to the circulating elements 11 may be modest again, because the real inside temperature will reasonably be less influenced by the thermal flow from the outside and caused by solar radiation.

With reference to figure 8A, the opening or closing of the flow rate regulating valves 93, 93A, 93B may be advantageously governed by a control unit UC according to a signal received from the second temperature means MS2. With this regard, these means may comprise a plurality of temperature sensors MS2', MS2", MS3"', each of which is intended to detect the real temperature within a predetermined room 10, 10A, 10B of said building assuming that several rooms are present therein. With this regard, schematic figure 8A shows a plan view of a building comprising three rooms 10, 10A, 10B in each of which a corresponding temperature sensor means MS2', MS2", MS3"' is placed. The signals ST', ST", ST"' sent by the various sensor means are processed by the control unit UC which controls the flow rate regulating valves 93, arranged on a first wall 8 of the building, the valves 93B arranged on a second wall 8B of the building and the valves 93C arranged on a third wall 8B of the building. In winter operating mode, for example, if the temperature of the first room 10 is higher than the desired temperature value Ti', for example by virtue of a good exposure to solar radiation or due to the presence of indoor heat sources, then the control unit UC may control a partial or even total closing of the regulating valves 93 on the first wall 8 and a greater opening, if needed, of the valves 93A,93B for the distribution on the other walls 8A,8B in order to reach the temperatures Ti' and Ti" faster. By means of this type of regulation, the water flow rate is continuously and advantageously redistributed according to real needs, thus optimizing the operation of the covering and climate control system.

Again with reference to the schematic view in figure 8A, it is noted that if the desired temperature Ti"' of room 10B is higher than the desired temperature of all the other rooms 10,10A, then the valves 93B located on the third wall 8B and the valves $93A_1$ and $93A_2$ on the second wall 8A may be regulated so as to allow the passage of a higher water flow rate than the other valves 93 and 93A. Thereby, the outer walls (8B and a portion of 8A) covered by system 5 and externally delimiting the room 10B have a higher thermal energy flow than that provided to the other walls. Thereby, the desired temperature targets Ti' and Ti"' in the various rooms may be advantageously reached substantially at the same time.

Again with reference to figure 8, the dashed line indicates the periphery of a heated/cooled room 10 according to the invention, while the solid lines indicate the distribution lines formed by the connection of the water circulating elements 11 forming the hydraulic circuit. In the schematic view, room 10 has four masonry walls 8, 8A structurally arranged according to the plan view in figure 1. According to an embodiment of the invention, the circulating elements 11 are connected so that the hydraulic circuit has a first distribution loop 81 connected to the outlet of the heat pump PC and a return loop 82 connected to the inlet of the same heat pump PC. Loops 81, 82 have a substantially horizontal orientation and develop along the covered walls of the system (all the surfaces in this case).

The first distribution loop 81 is arranged in a position close to the base of the building and communicates with the outlet of a heat exchanger (condenser or evaporator) of the heat pump PC through the hydraulic pump 96. The return loop 82 is arranged in the upper part of the wall in a position close to the roof of the building and communicates with the inlet of the same heat exchanger (condenser or evaporator) of the heat pump PC.

The circulating elements of the hydraulic circuit comprise vertical distribution lines 88, which develop between the two distribution loops 81, 82. The hydraulic circuit further comprises a second lower distribution loop 83, which develops parallel to and over the above-mentioned first loop 81.

As shown, the vertical distribution lines 88 converge into a collection line 82B communicating with the return loop 82. In particular, it is worth noting that the collection line 82B and the return loop 82 communicate in a portion A of wall 8A diagonally opposite to a portion B, from which the distribution loop 81 is developed on the wall 8A itself (these portions are identified by two dashed circles A, B). This arrangement allows to ensure a constant flow rate in all tubes, and thus a uniform distribution of the thermal flow associated with such a flow rate, thus avoiding the formation of preferential circulation routes. Again with reference to figure 8, it is worth noting that the first distribution loop 81 is hydraulically connected to the second distribution loop 83 by means of the first connections 91, along which the first flow rate regulating valves 93, 93A are arranged.

The water circulation mode within the above-described hydraulic circuit is disclosed below. The delivery water at temperature Ta at outlet of the exchanger (evaporator/condenser) to the heat pump PC is sent through the hydraulic pump 96 to the first distribution loop 81. Through the connections 91 and the regulating valves 93, it reaches the second lower distribution loop 83 and then crosses the vertical lines 88. The water is then conveyed into the upper loop 82 through the collection line 82B. The water flow thus returns to the heat pump PC at a temperature Tr which will be either lower or higher than the temperature Ta according to the winter or summer operation of the system.

As shown above, the flow rate regulating valves 93 allow to advantageously vary the flow rate crossing the vertical lines 88 installed on a predetermined wall. If, for example, a first wall 8A of building 10 is highly exposed to solar radiation during the winter season, then the corresponding regulating valves 93 will be regulated so as to reduce the water flow rate because the output thermal flow to be contrasted will be lower than that of a second wall of building 8B with less exposure, the desired inside temperature Ti of the room being equal. As mentioned above, this operating mode allows to optimize the operation and efficiency of the heat pump PC.

According to a preferred embodiment of the invention, the covering system 5 comprises further temperature sensor means MS3 arranged to measure the temperature Tr of the water circulating in the hydraulic circuit upstream of said heat pump PC. The term "upstream" indicates that such a temperature Tr is measured in the return branch 11A, i.e. before the water is heated/cooled by the heat pump PC. Again according to an embodiment of the invention, the speed of the hydraulic pump 96, i.e. the delivered water frlo rate, is varied according to the temperature Tr measured by said third temperature sensor means MS3.

Varying the flow rate according to the temperature Tr, a continuous effective thermal exchange is ensured between circulation water and heat pump PC. Indeed, if some of the regulating valves 93, 93A are totally and partially closed, the water could go back to the heat pump at an excessively high temperature Tr, due to the shorter path, with respect to that provided for the heat exchange at the condenser/evaporator of the heat pump PC. In other words, indeed, the short path may not allow the water to dispose of its thermal content. By means of the above-disclosed regulation, if the third sensor means MS3 detect a temperature Tr higher than the optimal temperature for heat exchange, the hydraulic pump 96 is advantageously slowed down so as to decrease the delivery water flow rate. Thereby, the lower flow rate of circulating water may correctly dispose of its thermal content while crossing the hydraulic circuit, thus returning to the heat pump PC under the most suitable condition for thermal exchange. In other words, by means of the regulation of the speed of the hydraulic pump 96 according to temperature Tr, the flow rate is varied according to the shape variation of the hydraulic circuit, established each time by the opening/closing conditions of the regulating valves.

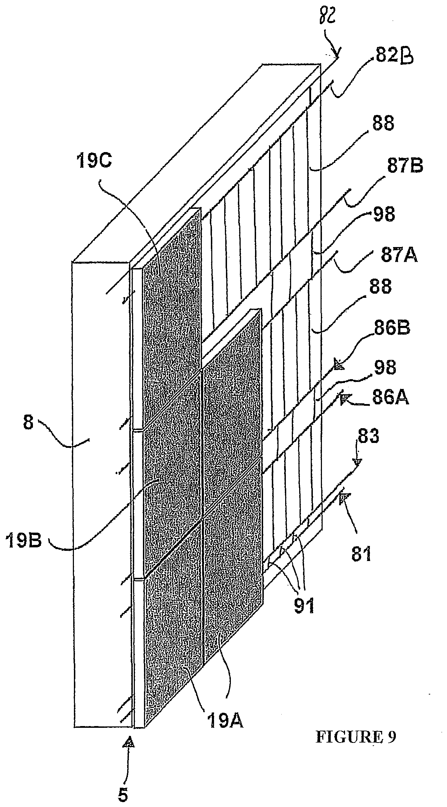

Figure 9 is a schematic view of a second possible mode of installing the water circulating elements according to an embodiment of the present invention. As shown, the circulating elements are connected so as to configure a hydraulic circuit conceptually similar to that in figure 8, but provided with a plurality of intermediate distribution loops 86A, 86B, 87, 87B which are developed parallel to the return loop 82 and to the lower distribution loops 81, 83. As precisely apparent from figure 9, the intermediate distribution loops 86A, 86B, 87, 87B are connected to one another by further hydraulic connections 98 which convey the water from an intermediate loop to an immediately adjacent one. The arrangement of the intermediate distribution loops 86A, 86B, 87, 87B allows to advantageously intensify the hydraulic circuit, i.e. to make the heat exchange through the covered wall 8 more uniform. At the same time, the intermediate distribution loops 86A, 86B, 87, 87B advantageously allow to reduce the length of the vertical distribution lines 88, thus simplifying in practice the installation of the hydraulic system.

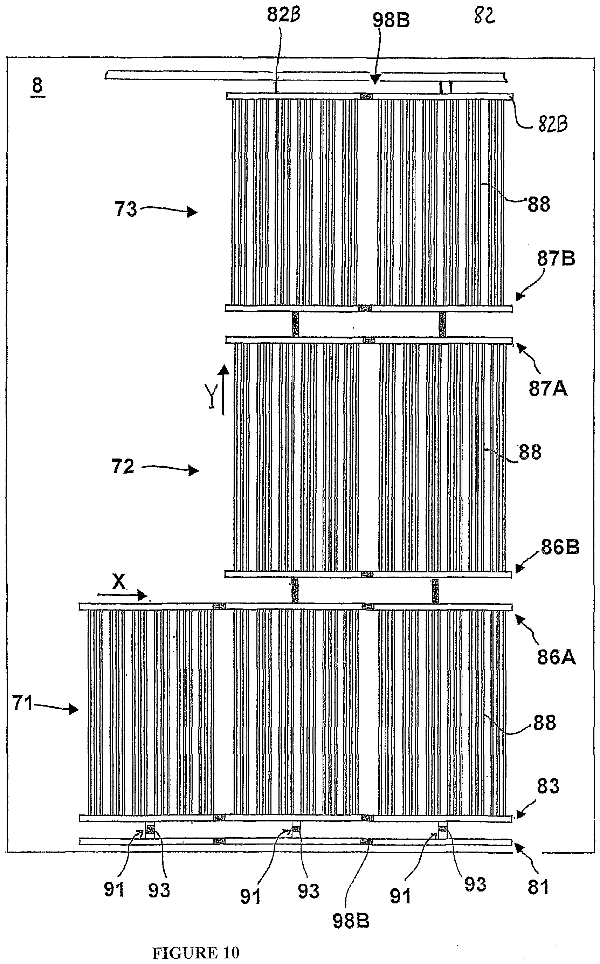

With this regard, according to preferred installation mode schematically shown in figure 10, the hydraulic circuit is advantageously made by connecting a plurality of predetermined hydraulic modules 71, 72, 73. These modules are assembled before being installed on the wall 8 so as to be reciprocally connectable to define the hydraulic circuit. More in detail, in this illustrated case, each hydraulic module 71, 72, 73 practically consists of at least a first main distribution segment and at least a second main distribution segment between which secondary distribution segments are developed. Each hydraulic module comprises first hydraulic connection means for connecting the main distribution segments to those of an another hydraulic module according to a direction X, in which the same main segments are developed. Each module further comprises second hydraulic connection means for connecting each main distribution segment to another segment of another module according to a direction Y parallel to that of the secondary distribution segments. In this case shown in figure 10, the distribution segments consist of circulating elements in the form of tubes, the diameter of which may vary according to the flow rate to be distributed, which in turn will depend on the operative conditions.

Again with reference to figure 10, the plurality of hydraulic modules is divided into a first series of lower modules 71, a second series of intermediate modules 72 and a third series of upper modules 73. The lower modules 71 are reciprocally connected through the corresponding first connection means and are configured so that once installed they define the lower distribution loops 81, 83. Similarly, the upper modules 73 are connected so that the main segments define the collection line 82B hydraulically connected to the return loop 82. The intermediate modules 72 are connected to the lower modules 71 and to the upper modules 73 through the corresponding connection means so as to define the connections indicated by reference numeral 98 in figure 10. The intermediate hydraulic modules 72 are further reciprocally connected through the corresponding first connection means so as to define the hydraulic connections indicated by reference numeral 98B in figure 10. Using the hydraulic modules 71, 72, 73, as described above, has several advantages, the first of which is found in the ease and speed of installing the hydraulic circuit. The hydraulic modules 71, 72, 73 are indeed separately made and then installed on the surface to be covered. By virtue of the easy connection, such an installation may be carried out quickly, safely and by using a modest number of operators. These advantages obviously result in a decrease of installation times and costs.

Again with reference to figure 9, according to a preferred embodiment of the method according to the invention, once the hydraulic circuit has been installed, it is covered by means of insulating means in the form of panels indicated by references 19A, 19B, 19C. These panels comprise an outer surface and an inner surface, indicating with the latter the surface intended to face the building wall to be covered. From the inner surface of the panels, grooves are developed which are correspondingly configured to the water circulating elements which are covered by the panel. More precisely, panels 19A, 19B, 19C are installed so that corresponding circulating elements may be accommodated within corresponding grooves. Thereby, each panel surrounds the corresponding circulating elements according to several directions and not only on the external side so as to increase the insulation degree. The concerned panels are directly fixed to the wall by using preferably removable fastening means in order to also facilitate future operations of covering inspection or replacement.

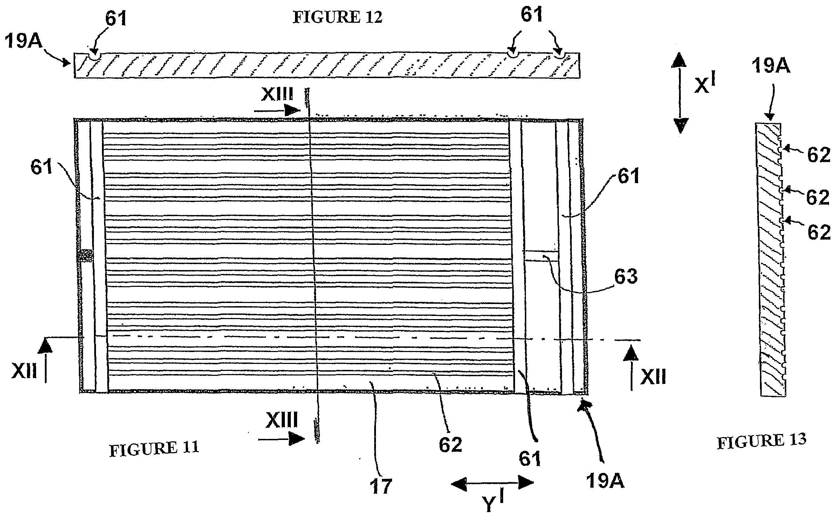

Figures from 11 to 13 relate to a first panel 19A, configured to cover a lower 71 or upper 73 hydraulic module of the hydraulic circuit in figure 10. As apparent from the plan view in figure 11, the first panel 19A comprises first grooves 61 arranged according to a first direction X' and intended to accommodate corresponding main hydraulic segments of the corresponding lower module 71. The panel further comprises second grooves arranged according to a direction Y' orthogonal to the first and intended to accommodate corresponding secondary hydraulic segment of lower module 71. The first panel 19A further comprises connection grooves 63 intended to accommodate the hydraulic connections indicated in figure 10 by reference numeral 98.

Figures from 14 to 16 relate to a second panel 19B configured to cover an intermediate hydraulic module 72 related to the hydraulic circuit shown in figure 10. Also for this second panel 19B, the arrangement of the existing grooves 61, 62, 63 corresponds to that of the tubes which form the corresponding hydraulic module 72 to be covered. For completeness, it is worth noting that the upper hydraulic module 73 may also be covered with a third panel 19C which is substantially the same as the second panel 19B described above. From the production point of view, the whole hydraulic circuit may be advantageously covered using modules of two types only, one intended to cover lower hydraulic modules 71 and one intended for intermediate 72 and upper 73 modules. In practice, using these panels 19A, 19B, 19C to externally cover the hydraulic circuit, in addition to increasing the thermal insulation, also allows to optimize installation times and costs. Furthermore, the shape of the panels ensures the firm positioning of the covered hydraulic modules with obvious advantages in terms of safety and reliability.

The solutions adopted for the room according to the invention allow to fully accomplish the mentioned task and objects. In particular, the room ensures a high degree of thermal insulation, thus being advantageously active with regards to climate control. The system further requires a low initial investment by virtue of the short installation times and costs required.

In practice, the materials used as well as the dimensions and the contingent shapes could be of any type according to the needs and the state of art.

**Claims**

1. Room (10) comprising peripheral walls (8,8A,8B) and a covering system (5) for heating/cooling and thermally insulating said room (10), wherein said covering system comprises:

   - heating/cooling means comprising a plurality of water circulating elements (11) and a heat pump (PC), said circulating elements (11) being installed in contact with the outer surface (88B) of at least one of said peripheral walls (8, 8A, 8B) of said room (10) and being connected to one another to define a hydraulic circuit connected to said heat pump (PC) so that the temperature (Ta) of the delivery water in said circuit is varied by means of a heat exchange with said heat pump (PC),

- covering means (9) made of thermally insulating material, operatively arranged to externally and laterally cover said water circulating elements (11) and to cover the portions of said outer surface (88B) of said peripheral wall not occupied by said circulating elements,

- wherein said hydraulic circuit comprises one or more regulating valves (93) for regulating the water flow rate inside said circulating elements (11), **characterized in that** there is an electronic regulating device for said delivery temperature (Ta) of the water circulating in said hydraulic circuit to be regulated according to the temperature (Te) outside said room (10); said system comprising second temperature sensor means (MS2) for detecting the real temperature inside said room (8), said system (5) comprising a control unit which controls said one or more regulating valves (93) according to a signal sent by said second temperature sensor means (MS2), said flow rate being distributed within the parts of said hydraulic circuit according to the differences between said real temperature inside said room and a desired temperature (Ti) predetermined for the room itself.

2.  Room (10) according to claim 1, wherein the temperature of the water circulating in said hydraulic circuit is varied by means of a heat exchange with the evaporator of said heat pump (PC), in summer operating mode, and with the condenser of said heat pump (PC), in winter operating mode.

3.  Room (10) according to claim 1 or 2, wherein said heat pump (PC) is of the water-water type and wherein said heat pump (PC) exchanges thermal energy both with the water circulating in said hydraulic circuit and with a low-cost water reserve.

4.  Room (10) according to any one of the claims from 1 to 3, wherein said system (5) comprises a pump (96) for circulating water within said hydraulic circuit, said system comprising third temperature sensor means (MS3) for measuring the temperature (Tr) of the water before the heat exchange with said heat pump (PC), said circulation pump varying the flow rate of delivery water according to said temperature detected by said third sensor.

5.  Room (10) according to claim 4, wherein for at least one outer wall of said building, said hydraulic circuit comprises:

- a first lower distribution loop (81) which is substantially horizontal and communicating with the outlet (11 A) of said heat pump (PC) by means of a hydraulic pump (96);
- a second lower distribution loop (83) which is substantially horizontal and arranged over said first lower loop (81) and at least partially in communication with the latter through said one or more flow rate regulating values (93);
- a collection loop (82B) connected to said second lower loop (83) by means of a plurality of substantially vertical distribution lines (88);
- a return loop (82) connected to the inlet of said heat pump (PC) and hydraulically connected to said collection loop (82B) close to a portion (A) of said diagonally opposite wall with respect to another portion (B) from which said first lower distribution loop (83) is developed.

6.  Room (10) according to any one of the claims from 1 to 5, wherein said covering means (9) comprise panels (19A, 19B, 19C) made of sintered polystyrene foam (EPS) and wherein at least one of said panels (19A, 19B, 19C) comprises a plurality of grooves (61, 62, 63) which develop on the corresponding inner surface according to an arrangement corresponding to that of the water circulating elements (11) covered by the panel itself, so that these elements (11) are arranged in corresponding grooves (61, 62, 63).

7.  A method for heating/cooling and thermally insulating a room (10) of a building, said method comprising the steps of:

    - providing heating/cooling means comprising a plurality of water circulating elements (11) and a heat pump (PC);
    - installing said water circulating elements (11) substantially in contact with an external surface of at least one peripheral wall (8, 8A, 8B) of said room (10) so as to define a hydraulic circuit;
    - connecting said hydraulic circuit to said heat pump so that the temperature of the water circulating in said heat pump (PC) is varied by means of a heat exchange with said heat pump;
    - externally and laterally covering said circulating elements (11) by means of insulating means (9) made of thermally insulating material, **characterized in that**

    wherein the delivery temperature (Ta) of the water in said hydraulic circuit is regulated according to the temperature outside said room (10) and wherein the flow rate of water is distributed within the parts of said hydraulic circuit according to the differences between said real temperature inside said room and a desired temperature (Ti) predetermined for the room itself,

and wherein the water flow rate through said hydraulic circuit is regulated by means of one or more flow rate regulating valves (93) controlled by a control unit according to a signal sent by sensor means (MS2) for detecting the temperature inside said room (8), said signal being characteristic of the difference between the real temperature of said room and the predetermined inside temperature (Ti) of the room itself.

8. A method according to claim 7, wherein in winter mode, said hydraulic circuit is connected to said heat pump (PC) so that said delivery temperature (Ta) is obtained by means of a heat exchange with a condenser of said heat pump (PC), and wherein in summer operating mode, said hydraulic water circuit is connected to said heat pump (PC) so that said delivery temperature (Ta) is obtained by means of a heat exchange with an evaporator of said heat pump (PC).

9. A method according to claim 7 or 8, wherein said heat pump is of the water-water type and wherein said heat pump (PC) exchanges thermal energy both with the water circulating in said hydraulic circuit and with a low-cost water reserve.

10. A method according to any one of the claims from 7 to 9, wherein a pump (96) is arranged for circulating water inside said hydraulic circuit.

11. A method according to one of the claims from 7 to 10, wherein said covering means (9) use panels (19A, 19B, 19C) made of sintered polystyrene foam (EPS) and wherein said panels (19A, 19B, 19C) are provided with grooves (61, 62, 63) which develop from the corresponding inner surface according to an arrangement corresponding to that of the water circulating elements (11) to be covered, so that the latter may be surrounded by said grooves (61, 62, 63) according to several directions.

12. A method according to any one of the claims from 7 to 11, wherein said circulating elements (11) are assembled, before being installed, according to a plurality of hydraulic modules (71, 72, 73) reciprocally connectable so as to define said hydraulic circuit.

**Patentansprüche**

1. Raum (10) mit Umfangswänden (8, 8A, 8B) und einem Abdecksystem (5) zum Heizen/Kühlen und zur thermischen Isolierung des Raumes (10), wobei das Abdecksystem umfasst:

   - ein Heiz-/Kühlmittel, das eine Mehrzahl von Wasserzirkulationselementen (11) sowie eine Wärmepumpe (PC) umfasst, wobei die Zirkulationselemente (11) in Kontakt mit der Außenfläche (88B) von zumindest einer der Umfangswände (8, 8A, 8B) des Raumes (10) installiert und miteinander verbunden sind, um einen hydraulischen Kreislauf zu definieren, der mit der Wärmepumpe (PC) verbunden ist, so dass die Temperatur (Ta) des Lieferwassers in dem Kreislauf mittels eines Wärmeaustauschs mit der Wärmepumpe (PC) variiert wird;
   - ein Abdeckmittel (9), das aus thermisch isolierendem Material besteht und funktional angeordnet ist, um die Wasserzirkulationselemente (11) extern und seitlich zu bedecken und die Abschnitte der Außenfläche (88B) der Umfangswand, die nicht von den Zirkulationselementen besetzt sind, abzudecken,
   - wobei der hydraulische Kreislauf ein oder mehrere Regulierungsventile (93) zum Regulieren des Wasserdurchflusses innerhalb der Zirkulationselemente (11) umfasst,

   **dadurch gekennzeichnet, dass** eine elektronische Regulierungsvorrichtung für die Liefertemperatur (Ta) des Wassers, das in dem hydraulischen Kreislauf zirkuliert, vorhanden ist, um gemäß der Temperatur (Te) außerhalb des Raumes (10) reguliert zu werden;
   wobei das System ein zweites Temperatursensormittel (MS2) zum Detektieren der echten Temperatur innerhalb des Raumes (8) umfasst, wobei das System (5) eine Steuereinheit umfasst, die das eine oder die mehreren Regulierungsventile (93) gemäß einem Signal steuert, das von dem zweiten Temperatursensormittel (MS2) gesendet ist, wobei der Durchfluss in den Teilen des hydraulischen Kreislaufs gemäß den Differenzen zwischen der realen Temperatur innerhalb des Raumes und einer Soll-Temperatur (Ti) verteilt ist, die für den Raum selbst vorbestimmt ist.

2. Raum (10) nach Anspruch 1, wobei die Temperatur des in dem hydraulischen Kreislauf zirkulierenden Wassers mittels eines Wärmeaustausches mit dem Verdampfer der Wärmepumpe (PC) im Sommerbetriebsmodus und mit dem Kondensator der Wärmepumpe (PC) im Winterbetriebsmodus variiert wird.

3. Raum (10) nach einem der Ansprüche 1 oder 2, wobei die Wärmepumpe (PC) vom Wasser-Wasser-Typ ist, und wobei die Wärmepumpe (PC) thermische Energie sowohl mit dem in dem hydraulischen Kreislauf zirkulierenden Wasser als auch mit einer kostengünstigen Wasserreserve tauscht.

4. Raum (10) nach einem der Ansprüche 1 bis 3, wobei das System (5) eine Pumpe (96) zum Zirkulieren von Wasser in dem hydraulischen Kreislauf umfasst, wobei das System ein drittes Temperatursensormittel (MS3) zum Messen der Temperatur (Tr) des Wassers vor dem Wärmeaustausch mit der Wärmepumpe (PC) umfasst, wobei die Zirkulationspumpe den Durchfluss von Lieferwasser gemäß der von dem dritten Sensor detektierten Temperatur variiert.

5. Raum (10) nach Anspruch 4, wobei für zumindest eine Außenwand des Gebäudes der hydraulische Kreislauf umfasst:

- eine erste untere Verteilungsschleife (81), die im Wesentlichen horizontal ist und mit dem Auslass (11A) der Wärmepumpe (PC) mittels der Hydraulikpumpe (96) kommuniziert;
- eine zweite untere Verteilungsschleife (83), die im Wesentlichen horizontal und über der ersten unteren Schleife (81) angeordnet ist und zumindest teilweise in Kommunikation mit dieser durch das eine oder die mehreren Durchfluss regulierenden Ventile (93) steht;
- eine Sammelschleife (82B), die mit der zweiten unteren Schleife (83) mittels einer Mehrzahl im Wesentlichen vertikaler Verteilungsleitungen (88) verbunden ist;
- eine Rückführschleife (82), die mit dem Einlass der Wärmepumpe (PC) verbunden und hydraulisch mit der Sammelschleife (82B) nahe einem Abschnitt (A) der diagonal entgegengesetzten Wand in Bezug auf einen anderen Abschnitt (B) verbunden ist, von dem die erste untere Verteilungsschleife (83) hervorgeht.

6. Raum (10) nach einem der Ansprüche 1 bis 5, wobei das Abdeckmittel (9) Platten (19A, 19B, 19C) umfasst, die aus gesintertem Polystyrenschaum (EPS) bestehen und wobei zumindest eine der Platten (19A, 19B, 19C) eine Mehrzahl von Nuten (61, 62, 63) umfasst, die an der entsprechenden Innenfläche gemäß einer Anordnung, die der der Wasserzirkulationselemente (11) entspricht, die von der Platte selbst bedeckt sind, hervorgehen, so dass diese Elemente (11) in entsprechenden Nuten (61, 62, 63) angeordnet sind.

7. Verfahren zum Heizen/Kühlen und thermischen Isolieren eines Raumes (10) eines Gebäudes, wobei das Verfahren die Schritte umfasst, dass:

- ein Heiz-/Kühlmittel bereitgestellt wird, das eine Mehrzahl von wasserzirkulierenden Elementen (11) sowie eine Wärmepumpe (PC) umfasst;
- die Wasserzirkulationselemente (11) im Wesentlichen in Kontakt mit einer Außenfläche zumindest einer Umfangswand (8, 8A, 8B) des Raumes (10) installiert werden, um einen hydraulischen Kreislauf zu definieren;
- der hydraulische Kreislauf mit der Wärmepumpe verbunden wird, so dass die Temperatur des in der Wärmepumpe (PC) zirkulierenden Wassers mittels eines Wärmeaustauschs mit der Wärmepumpe variiert wird;
- die zirkulierenden Elemente (11) mittels des Isolationsmittels (9), das aus thermisch isolierendem Material besteht, außen und seitlich abgedeckt werden,

**dadurch gekennzeichnet, dass**
wobei die Liefertemperatur (Ta) des Wassers in dem hydraulischen Kreislauf gemäß der Temperatur außerhalb des Raumes (10) reguliert wird und wobei der Durchfluss von Wasser in den Teilen des hydraulischen Kreislaufs gemäß den Differenzen zwischen der realen Temperatur in dem Raum und einer Solltemperatur (Ti), die für den Raum selbst vorbestimmt ist, verteilt ist,
und wobei der Wasserdurchfluss durch den hydraulischen Kreislauf mittels eines oder mehrerer Durchflussregulierungsventile (93) reguliert wird, die von einer Steuereinheit gemäß einem Signal gesteuert werden, das von einem Sensormittel (MS2) zur Detektion der Temperatur in dem Raum (8) gesendet wird, wobei das Signal charakteristisch für die Differenz zwischen der realen Temperatur des Raumes und der vorbestimmten Innentemperatur (Ti) des Raumes selbst ist.

8. Verfahren nach Anspruch 7, wobei im Wintermodus der hydraulische Kreislauf mit der Wärmepumpe (PC) verbunden ist, so dass die Liefertemperatur (Ta) mittels eines Wärmeaustauschs mit einem Kondensator der Wärmepumpe (PC) erhalten wird und wobei im Sommerbetriebsmodus der hydraulische Wasserkreislauf mit der Wärmepumpe (PC) verbunden ist, so dass die Liefertemperatur (Ta) mittels eines Wärmeaustauschs mit einem Verdampfer der Wärmepumpe (PC) erhalten wird.

9. Verfahren nach einem der Ansprüche 7 oder 8, wobei die Wärmepumpe vom Wasser-Wasser-Typ ist und wobei die Wärmepumpe (PC) thermische Energie sowohl mit dem in dem hydraulischen Kreislauf zirkulierenden Wasser als auch mit einer kostengünstigen Wasserreserve tauscht.

10. Verfahren nach einem der Ansprüche 7 bis 9, wobei eine Pumpe (96) zum Zirkulieren von Wasser in dem hydraulischen Kreislauf angeordnet ist.

11. Verfahren nach einem der Ansprüche 7 bis 10, wobei das Abdeckmittel (9) Platten (19A, 19B, 19C) verwendet, die aus gesintertem Polystyrolschaum (EPS) bestehen, und wobei die Platten (19A, 19B, 19C) mit Nuten (61, 62, 63) versehen sind, die von der entsprechenden Innenfläche gemäß einer Anordnung hervorgehen, die derjenigen der zu bedeckenden wasserzirkulierenden Elemente (11) entspricht, so dass diese von den Nuten (61, 62, 63) gemäß verschiedenen Richtungen umgeben sein können.

12. Verfahren nach einem der Ansprüche 7 bis 11, wobei die zirkulierenden Elemente (11) vor Installation gemäß einer Mehrzahl hydraulischer Module (71, 72, 73) reziprok verbindbar zusammengebaut werden, um so den hydraulischen Kreislauf zu definieren.

**Revendications**

1. Pièce (10) comprenant des murs périphériques (8,8A,8B) et un système de recouvrement (5) pour chauffer/refroidir et isoler thermiquement ladite pièce (10), dans lequel ledit système de recouvrement comprend :

   - un moyen de chauffage/refroidissement comprenant une pluralité d'éléments à circulation d'eau (11) et une pompe à chaleur (PC), lesdits éléments à circulation d'eau (11) étant installés en contact avec la surface externe (88B) d'au moins un desdits murs périphériques (8, 8A, 8B) de ladite pièce (10) et étant connectés les uns aux autres pour définir un circuit hydraulique connecté à ladite pompe à chaleur (PC) de sorte que la température (Ta) de l'eau fournie dans ledit circuit est variée au moyen d'un échangeur de chaleur avec ladite pompe à chaleur (PC),
   - moyen de recouvrement (9) fait d'un matériau isolant thermiquement, agencé fonctionnellement pour recouvrir extérieurement et latéralement lesdits éléments à circulation d'eau (11) et pour recouvrir les portions de ladite surface externe (88B) dudit mur périphérique non occupé par lesdits éléments à circulation d'eau,
   - dans lequel ledit circuit hydraulique comprend une ou plusieurs vannes de régulation (93) pour réguler le débit d'eau à l'intérieur desdits éléments à circulation d'eau (11), **caractérisé en ce qu'**il y a un dispositif de régulation électronique pour réguler ladite température de fourniture (Ta) de l'eau circulant dans ledit circuit hydraulique selon la température (Te) à l'extérieur de ladite pièce (10) ;

   ledit système comprenant un deuxième moyen de sonde de température (MS2) pour détecter la température réelle à l'intérieur de ladite pièce (8), ledit système (5) comprenant une unité de commande qui commande ladite une ou lesdites plusieurs vannes de régulation (93) selon un signal envoyé par ledit second moyen de sonde de température (MS2), ledit débit étant distribué à l'intérieur des parties dudit circuit hydraulique selon les différences entre ladite température réelle à l'intérieur de ladite pièce et une température souhaitée (Ti) prédéterminée pour la pièce même.

2. Pièce (10) selon la revendication 1, dans lequel la température de l'eau circulant dans ledit circuit hydraulique est variée au moyen d'un échangeur de chaleur avec l'évaporateur de ladite pompe à chaleur (PC), en mode de fonctionnement d'été, et avec le condenseur de ladite pompe à chaleur (PC), en mode de fonctionnement d'hiver.

3. Pièce (10) selon la revendication 1 ou 2, dans lequel ladite pompe à chaleur (PC) est du type eau-eau et dans lequel ladite pompe à chaleur (PC) échange l'énergie thermique à la fois avec l'eau circulant dans ledit circuit hydraulique et avec une réserve d'eau à faibles coûts.

4. Pièce (10) selon l'une quelconque des revendications 1 à 3, dans lequel ledit système (5) comprend une pompe (96) pour faire circuler l'eau à l'intérieur dudit circuit hydraulique, ledit système comprenant un troisième moyen de sonde de température (MS3) pour mesurer la température (Tr) de l'eau avant l'échangeur de chaleur avec ladite pompe à chaleur (PC), ladite pompe de circulation variant le débit de l'eau fournie selon ladite température détectée par ladite troisième sonde.

5. Pièce (10) selon la revendication 4, dans lequel pour au moins un mur extérieur dudit immeuble, ledit circuit hydraulique comprend :

   - une première boucle de distribution inférieure (81) qui est essentiellement horizontale et communiquante avec l'orifice de sortie (11A) de ladite pompe à chaleur (PC) au moyen d'une pompe hydraulique (96) ;
   - une seconde boucle de distribution inférieure (83) qui est essentiellement horizontale et agencée au-dessus de ladite première boucle de distribution inférieure (81) et au moins en partie en communication avec cette dernière par le biais de ladite une ou desdites plusieurs vannes de régulation de débit (93) ;
   - une boucle de collecte (82B) connectée à ladite seconde boucle de distribution inférieure (83) au moyen d'une pluralité de lignes de distribution essentiellement verticales (88) ;
   - une boucle de retour (82) connectée à l'orifice d'entrée de ladite pompe à chaleur (PC) et connectée hydrauliquement à ladite boucle de collecte (82B) à proximité d'une portion (A) dudit mur diagonalement opposé en ce qui concerne une autre portion (B) à partir de laquelle ladite première boucle de distribution inférieure (83) est développée.

**6.** Pièce (10) selon l'une quelconque des revendications 1 à 5, dans lequel ledit moyen de recouvrement (9) comprend des panneaux (19A, 19B, 19C) faits de mousse de polystyrène expansé (EPS) et dans lequel au moins un desdits panneaux (19A, 19B, 19C) comprend une pluralité de rainures (61, 62, 63) qui se développent sur la surface interne correspondante selon un agencement correspondant à celui des éléments à circulation d'eau (11) recouverts par le panneau même, de sorte que ces éléments (11) sont agencés dans des rainures correspondantes (61, 62, 63).

**7.** Procédé pour chauffer/refroidir et isoler thermiquement une pièce (10) d'un immeuble, ledit procédé comprenant les étapes suivantes :

- la fourniture d'un moyen de chauffage/refroidissement comprenant une pluralité d'éléments à circulation d'eau (11) et une pompe à chaleur (PC) ;
- l'installation desdits éléments à circulation d'eau (11) essentiellement en contact avec une surface externe d'au moins un mur périphérique (8, 8A, 8B) de ladite pièce (10) de sorte à définir un circuit hydraulique ;
- la connexion dudit circuit hydraulique à ladite pompe à chaleur de sorte que la température de l'eau circulant dans ladite pompe à chaleur (PC) est variée au moyen d'un échangeur de chaleur avec ladite pompe à chaleur ;
- le recouvrement extérieurement et latéralement desdits éléments à circulation d'eau (11) au moyen d'un moyen d'isolation (9) fait d'un matériau thermiquement isolant,

**caractérisé en ce que**,

dans lequel la température de fourniture (Ta) de l'eau dans ledit circuit hydraulique est régulée selon la température à l'extérieur de ladite pièce (10) et dans lequel le débit de l'eau est distribué à l'intérieur des parties dudit circuit hydraulique selon les différences entre ladite température réelle à l'intérieur de ladite pièce et une température souhaitée (Ti) prédéterminée pour la pièce même,

et dans lequel le débit d'eau à travers ledit circuit hydraulique est régulé au moyen d'une ou de plusieurs vannes de régulation de débit (93) commandées par une unité de commande selon un signal envoyé par un moyen de sonde (MS2) servant à détecter la température à l'intérieur de ladite pièce (8), ledit signal étant caractéristique de la différence entre la température réelle de ladite pièce et la température à l'intérieur prédéterminée (Ti) de la pièce même.

**8.** Procédé selon la revendication 7, dans lequel, en mode d'hiver, ledit circuit hydraulique est connecté à ladite pompe à chaleur (PC) de sorte que ladite température de fourniture (Ta) est obtenue au moyen d'un échangeur de chaleur avec un condenseur de ladite pompe à chaleur (PC), et dans lequel, en mode de fonctionnement d'été, ledit circuit d'eau hydraulique est connecté à ladite pompe à chaleur (PC) de sorte que ladite température de fourniture (Ta) est obtenue au moyen d'un échangeur de chaleur avec un évaporateur de ladite pompe à chaleur (PC).

**9.** Procédé selon la revendication 7 ou 8, dans lequel ladite pompe à chaleur est du type eau-eau et dans lequel ladite pompe à chaleur (PC) échange l'énergie thermique à la fois avec l'eau circulant dans ledit circuit hydraulique et avec une réserve d'eau à faibles coûts.

**10.** Pompe selon l'une quelconque des revendications 7 à 9, dans laquelle une pompe (96) est agencée pour faire circuler l'eau à l'intérieur dudit circuit hydraulique.

**11.** Procédé selon l'une quelconque des revendications 7 à 10, dans lequel ledit moyen de recouvrement (9) utilise des panneaux (19A, 19B, 19C) faits de mousse de polystyrène expansé (EPS) et dans lequel lesdits panneaux (19A, 19B, 19C) sont pourvus de rainures (61, 62, 63) qui se développent à partir de la surface interne correspondante selon un agencement correspondant à celui des éléments à circulation d'eau (11) à recouvrir, de sorte que ces derniers peuvent être entourés par lesdites rainures (61, 62, 63) selon plusieurs directions.

**12.** Procédé selon l'une quelconque des revendications 7 à 11, dans lequel lesdits éléments à circulation d'eau (11) sont assemblés, avant d'être installés, selon une pluralité de modules hydrauliques (71, 72, 73) réciproquement connectables de sorte à définir ledit circuit hydraulique.

FIGURE 1

FIGURE 3

FIGURE 2

FIGURE 5

FIGURE 4

FIGURE 7

FIGURE 6

FIGURE 8

FIGURE 8A

FIGURE 9

FIGURE 10

FIGURE 12

FIGURE 11

FIGURE 13

61 61 19A 61 61 63 62 61 17 19A 19A 62 62 62

EP 2 478 301 B1

FIGURE 15

19B

61     61

XVI

63

63     63

XV     XV

61

XVI

62

19B

62

FIGURE 14

X<sup>l</sup>

Y<sup>l</sup>

19B

FIGURE 16

62

62

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0002839 A
- US 6347748 B
- DE 19740074
- EP 0049790 A
- DE 3435613